# EUROPEAN PATENT APPLICATION

(11) **EP 3 499 068 A1**
(43) Date of publication of application: **19.06.2019**
(21) Application number: 18191618.0
(22) Date of filing: 30.08.2018
(51) Int. Cl.: F16C 43/04, F16C 29/06, F16C 29/08, F16C 33/76

(54) **LINEAR GUIDE HAVING FIXED UPPER SEAL**

(30) Priority: 13.12.2017 KR 20170171221
(71) Applicant: SBC Linear Co.,Ltd., Seoul 07282 (KR)
(72) Inventor: CHUNG, Young Jae, 10375 Goyang-si, Gyeonggi-do (KR)
(74) Representative: Zardi, Marco

(57) **Abstract**

Disclosed is a linear guide including end plates installed on front and rear sides of a block that is disposed in a rail to be slid, end seals inserted into the end plates, and an upper seal installed in the end seals to be located on the upper side of the rail, wherein the upper seal has end seal insertion recesses, ends of which are opened such that the ends seals are inserted into the opened ends of the upper seal, and wherein fixing parts protruding from surfaces of the end seals, which face the block, and inserted into the end seal insertion recesses are formed in the end seals. Accordingly, the upper seal installed in the end seals may be fixed not to be biased to the left and right sides.

## Description

### BACKGROUND

Embodiments of the inventive concept described herein relates to a linear guide, and more particularly, relate to a linear guide that has an upper seal for preventing foreign substance from being introduced.

In general, in industrial machine tools, robots, automatic tool exchange apparatuses, and various general machines, a linear guide is installed at a part at which a slide movement is required to linearly guide an object from a reference location to a target location.

A conventional linear guide includes Korean Patent No. 10-0891321 (hereinafter, referred to as 'patent document 1').

The linear guide of patent document 1 includes a rail 100 in which a groove, on which a rolling element 240 travels, is formed in a lengthwise direction thereof, two blocks 210 that is disposed to face front and rear sides of the rail 100 to be slid on the rail 100, end members that is installed on opposite sides of the blocks 210, end members that are installed between the end members and the blocks 210 and include an end seal for removing foreign substances on the rail 100, an upper seal and a lower seal that prevents foreign substances on the upper and lower sides of the block 210 from being introduced to the rail 100 through apertures between the end members and the block 210, and travel guide members that are disposed between the groove of the rail 100 and the blocks 210 and include rolling elements 240 that guide travels of the blocks 210.

Each of the end members includes an end plate 220 which is installed to face the block 210 and into which lubricant is injected, and an end seal 230 that is installed on a surface of the end plate 220, which does not face the block 210, to prevent foreign substance from being introduced between the end member and the rail 100.

A lubricant channel, in which an injection hole 228, through which the lubricant introduced from the end plate 220 is injected, a passage, and an outlet are formed, is formed in the end member. The lubricant discharged from the lubricant channel is supplied between the rail 100 and the roller elements 240 after being delivered to the travel guide members.

Because the conventional linear guide does not have a unit for fixing the end seals such that the end seals are not shaken in a state in which the upper seal is installed, an additional component has been required.

### [Prior Technical Documents]

### [Patent Documents]

(Patent document 0001) Korean Patent No. 10-0891321

### SUMMARY

Embodiments of the inventive concept provide a linear guide in which an upper is fixed without being biased to the left and right sides.

Embodiments of the inventive concept also provide a linear guide in which an upper seal may be easily installed and fixed.

In accordance with an aspect of the inventive concept, there is provided a linear guide including end plates installed on front and rear sides of a block that is disposed in a rail to be slid, end seals inserted into the end plates, and an upper seal installed in the end seals to be located on the upper side of the rail, wherein the upper seal has end seal insertion recesses, ends of which are opened such that the ends seals are inserted into the opened ends of the upper seal, and wherein fixing parts protruding from surfaces of the end seals, which face the block, and inserted into the end seal insertion recesses are formed in the end seals.

The upper seal may be installed in the fixing parts of the end seals, the fixing parts may have have upper seal insertion recesses, into which the upper seal is inserted, and opposite sides of the end seal insertion recesses may face opposite sides of the upper seal insertion recesses when the upper seal is installed in the end seals.

Each of the end seal insertion recesses may be surrounded by opposite side surfaces, and a stop surface, opposite ends of which are connected to the opposite side surfaces and which is stopped by one end of the corresponding fixing part, and the fixing part may include a side surface recess, into which opposite side surfaces of the corresponding end seal insertion recess.

Each of the fixing parts may include opposite sliding pieces having the side surface recesses, and a stopper formed between the opposite sliding pieces, and the stopper may protrude to one side than the sliding pieces such that the stop surface of the upper seal is stopped by the stopper.

A stopper insertion recess formed by recessing the stop surface of the upper seal such that the stopper is inserted into the stopper insertion recess may be further formed in the corresponding end seal insertion recess, and the stop surfaces may be located on opposite sides of the stopper.

A recess, into which an inner surface defined by the stop surface and the stopper insertion recess is inserted, may be formed in the stopper.

One end plate and one end seal may be installed on each of front and rear sides of the block, and the front side and the rear side of the upper seal may be installed in the front end seal and the rear end seal.

### BRIEF DESCRIPTION OF THE FIGURES

The above and other objects and features will become apparent from the following description with reference to the following figures, wherein like reference numerals refer to like parts throughout the various figures unless otherwise specified, and wherein:

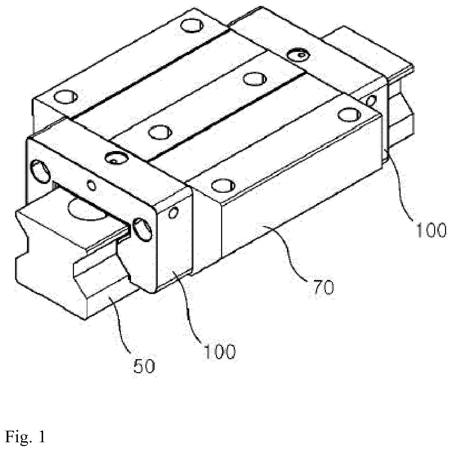

FIG. 1 is a perspective view of a state in which a linear guide according to the inventive concept is installed on a rail;

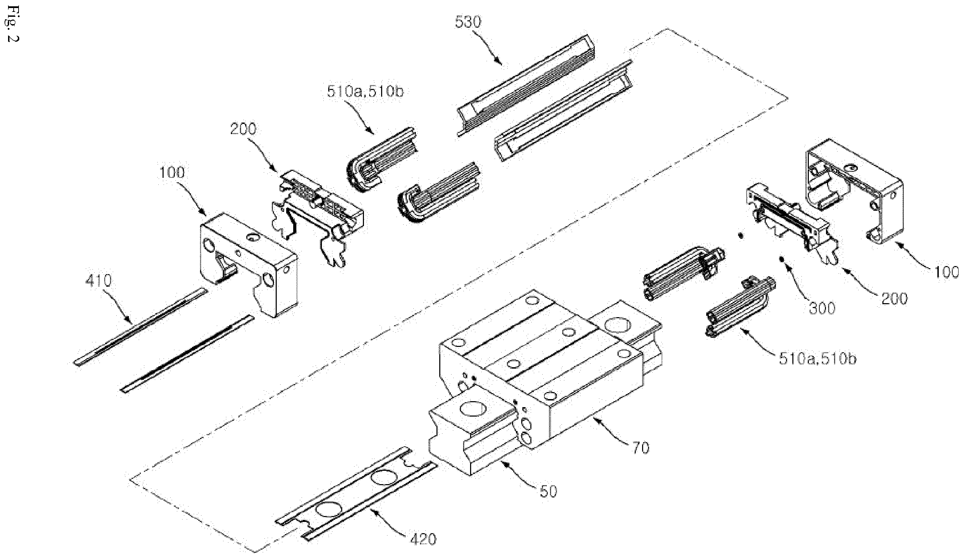

FIG. 2 is an exploded view of FIG. 1;

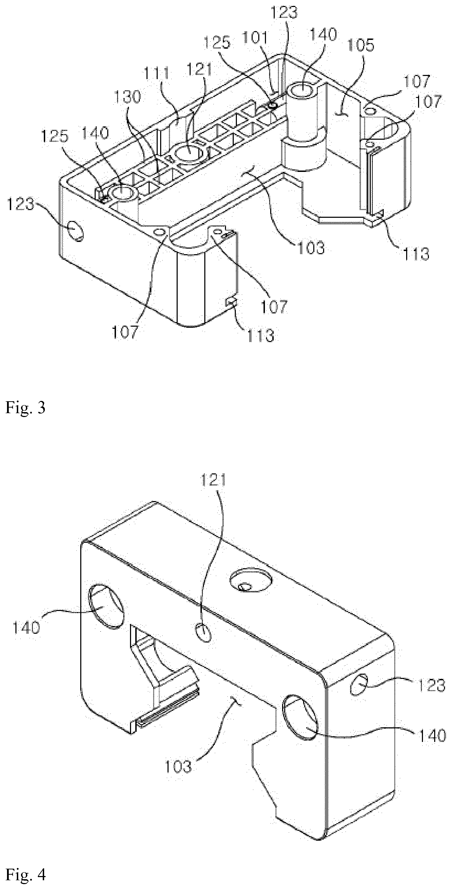

FIG. 3 is a front perspective view of an end plate of FIG. 1;
FIG. 4 is a rear perspective view of the end plate of FIG. 1;

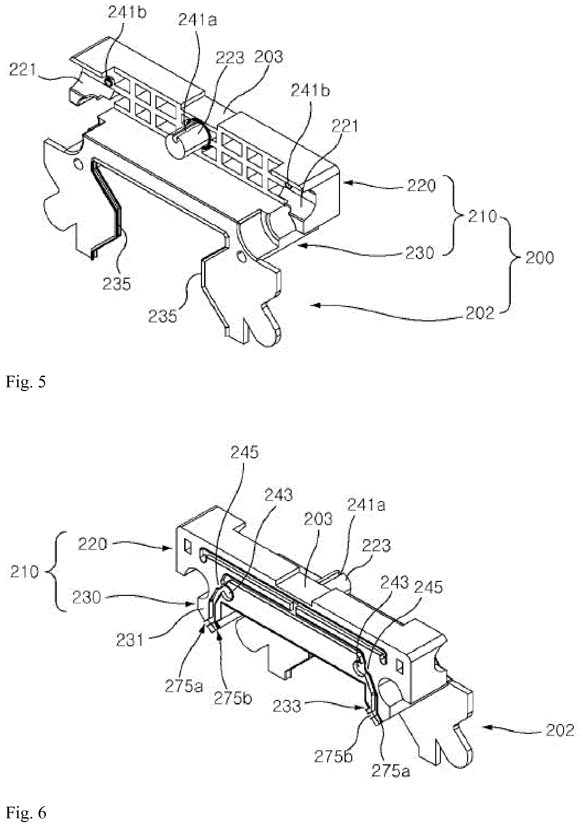

FIG. 5 is a perspective view of a front side of an end seal of FIG. 1, when viewed from the top;
FIG. 6 is a perspective view of the front side of the end seal of FIG. 1, when viewed from the bottom;

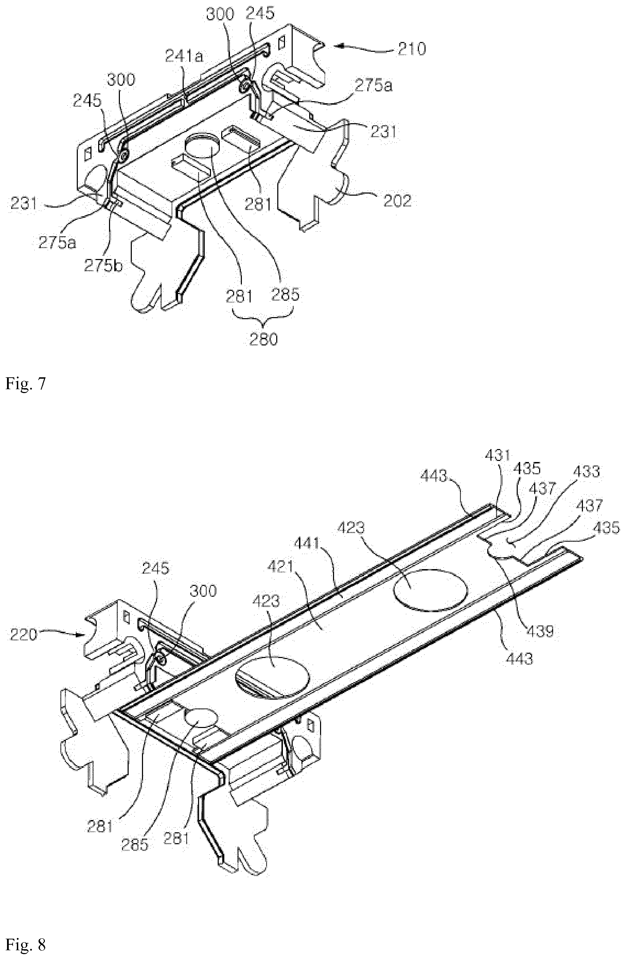

FIG. 7 is a perspective view of the end seal of FIG. 1, when viewed from the rear side;
FIG. 8 is a perspective view of a state in which an upper seal is installed in the end seal of FIG. 1;

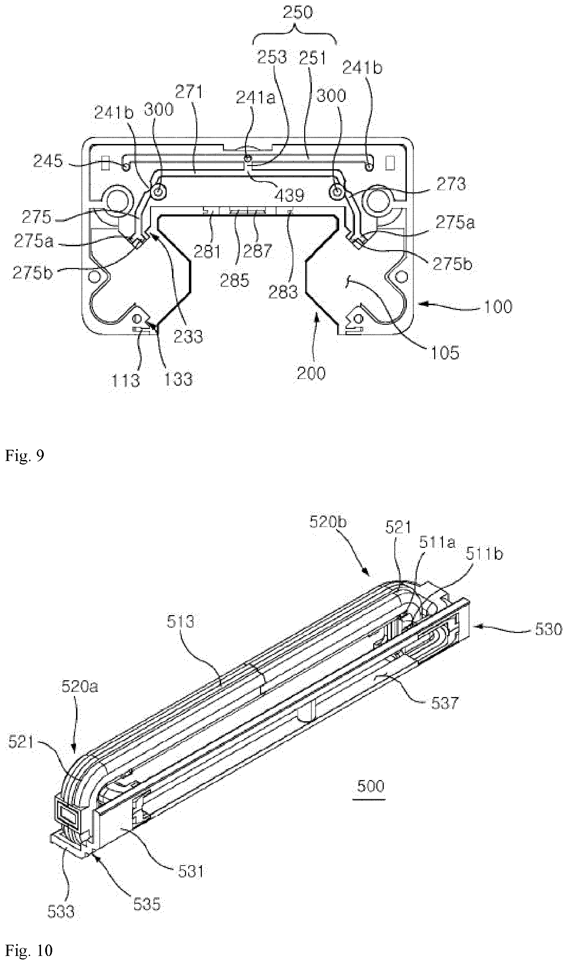

FIG. 9 is a front view of a state in which the end seal is installed in an end plate of FIG. 1;
FIG. 10 is a perspective view of a roller guide part of FIG. 1;

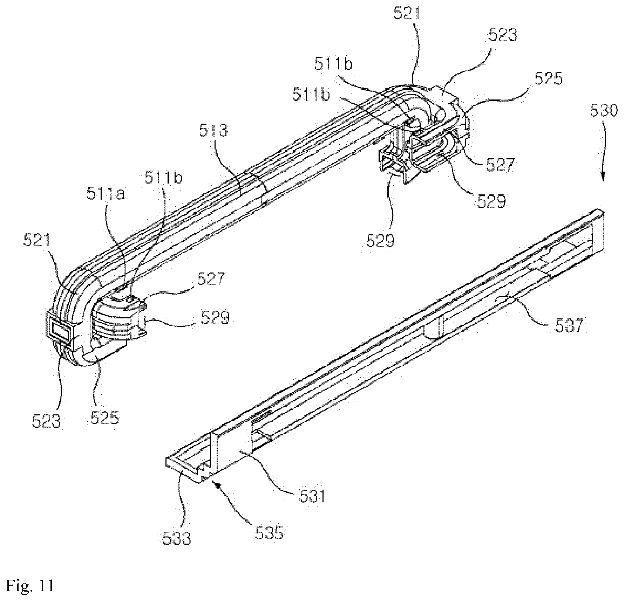

FIG. 11 is an exploded perspective view of FIG. 10;

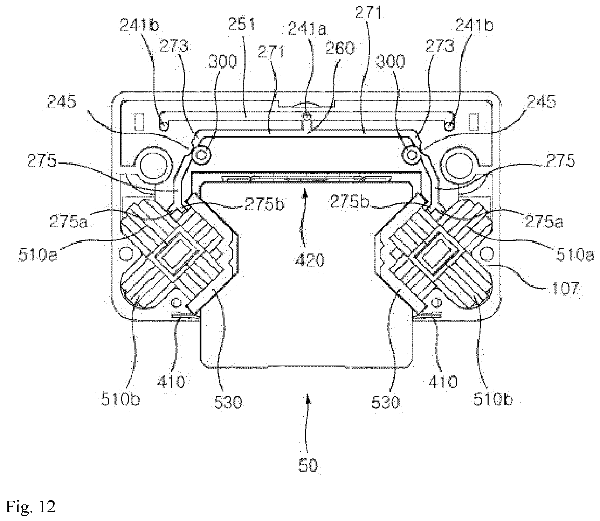

FIG. 12 is a sectional view of FIG. 1;

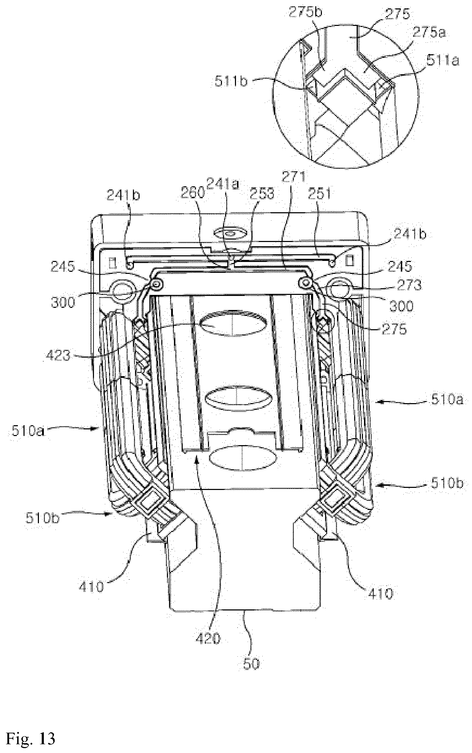

FIG. 13 is another sectional view of FIG. 1; and
FIG. 14 is a perspective view of some components when the liner guide is inclined at an angle of 90 degrees.

### DETAILED DESCRIPTION

Hereinafter, among the configurations of the inventive concept that will be described below, the configurations that are the same as those of the conventional technology will be referenced by the conventional technology, and a separate detailed description thereof will be omitted.

Here, the terminologies used herein are for simply mentioning specific embodiments, and are not intended to limit the inventive concept. The singular forms used herein include plural forms as long as the phrases do not explicitly represent contrary meanings. The meaning of the wording 'including' used in the specification specifies a specific feature, an area, an integer, a step, an operation, an element, and/or a component, and does not exclude presence or addition of another specific feature, another area, another integer, another step, another operation, another element, another component, and/or another group.

When it is mentioned that an element 'is connected to' or 'contact' another element, the element may be directly connected to the second element or directly contact the second element but a third element may be present between them.

Hereinafter, exemplary embodiments of a linear guide according to the inventive concept will be described with reference to the drawings.

The linear guide having an end seal 200 in which a passage opening/closing elastic body 300 is installed according to the present embodiment includes a rail 50, a block 70 that is disposed on the rail 50 to be slid, end plates 100 that are installed on the front and rear sides of the block 70, end seals 200 that are inserted into the end plates 100, an upper seal 420 that is installed in the end seals 200 to be located on the upper side of the rail 50, lower seals 410 that are inserted into the right and left lower sides of the end plates 100, and travel guide parts 111 that are installed between the rail 50 and the block 70 to help sliding of the block 70.

For one linear guide, two end plates 100 and the two end seals 200 are installed on the front and rear sides of the block 70 one for each, the front sides and the rear sides of the upper seal 420 is installed on the front end seal 200 and the lower end seal 200, respectively, and a total of two travel guide parts 111 are installed on the left and right sides of the rail 50.

### --------------- End plate 100 ---------------

The end plate 100 includes a first surface that faces the block 70 and is opened such that the end seal 200 is inserted into the first surface, a second surface that is opposite to the first surface, an upper surface that connects upper ends of the first surface and the second surface, a left surface and a right surface connected to the left and right ends of the upper surface, and a lower surface that is connected to the upper surface and the left and right surfaces and has an opening at the center thereof.

An opening corresponding to the shape of the cross-section of the rail 50 is formed on the second surface. A space into which the rail 50 is inserted is formed by the opening of the second surface and the opening of the lower surface.

Lubricant injecting parts 121 and 123 that deliver lubricant to lubricant channels of the end seals 200, which will be described below, are formed on the left surface, the right surface, and the second surface of the end plate 100. That is, in the present embodiment, a total number of the lubricant injecting parts 121 and 123 are three. Hereinafter, the lubricant injecting part of the second surface is referred to as a first injection part 121, and the lubricant injecting parts of the left and right surfaces are referred to as second injection parts 123. A lubricant nozzle (not illustrated) may be connected to the first injection part 121, and socket set screws (not illustrated) may be installed in the second injection parts 123. The lubricant injection parts 121 and 123 have tubular shape.

The second injection parts 123 protrude to the insides of the ends plates, and an injection passage 125, and an injection passage 125 that connects the second injection part 123 and the lubricant channel, which will be described below, is formed in the protrusion that is close to the first surface.

A rib 130 that connects the lubricant injecting parts 121 and 123 is formed between the lubricant injecting parts 121 and 123. The rib 130 extends from the upper surface, the second injection parts 123, and a screw coupling part 140, which will be described below. The rib 130 protrudes from the second surface toward the first surface and extends to a central portion of the end plate 100.

Meanwhile, the screw coupling parts 140, with which screws (not illustrated) for assembling the end plate 100 in the block 70 are engaged, protrude from the second surface toward the first surface of the end plate 100. The screw coupling parts 140 are formed on opposite sides of the end plate 100.

A lower end of the rib 130 is connected to the screw coupling parts 140 on the opposite sides. Accordingly, the end plate 100 is divided into an upper space 101 and a lower space 103 with respect to the lower end of the rib 130 and the screw coupling parts 140. The depth of the upper space 101 is approximately a half of the depth of the lower space 103.

Roller guide part accommodating parts 105, in which a roller guide part 500, which will be described below, is accommodated, are formed on opposite sides of the lower space 103 of the end plate 100. The roller guide part accommodating part 105 is a space of the lower space 103 of the end plate 100, which is surrounded by the left screw coupling part 140, the left surface, the left side of the lower surface, and the end seal 200 or is surrounded by the right screw coupling part 140, the right surface, the right side of the lower surface, and the end seal 200.

A guide part 111 that is inserted into a guide groove 203 of the end seal 200, which will be described below, protrudes downwards on the upper surface of the end plate 100. The guide part 111 is located on the upper side of the first injection part 121.

Positioning maintaining parts 107 protrude from the left and right sides and the lower surface of the end plate 100 such that an insertion location of the roller guide part 500, which will be described below, is maintained. The position maintaining parts 107 have triangular cross-sections, and protrude to the inside of the end plate 100.

A stop recess 133 by which a lower fixing piece 533 of a retainer 530, which will be described below, and a lower seal insertion recess 113, into which the lower seal 410 is inserted, are formed in the position maintaining part 107 of the lower surface of the end plate 100. The stop recess 133 is formed on the upper side of the lower seal insertion recess 113.

### --------------- End seal 200 ---------------

The end seal 200 includes a foreign substance introduction preventing piece 202 that is inserted into the lower space 103 to contact the second surface of the end plate 100, and a lubricant guide part 210 that protrudes from the upper side of the foreign substance introduction preventing piece 202 toward the first surface.

Because the foreign substance introduction preventing piece 202 is inserted into the lower space 103 of the end plate 100, it is preferable that the foreign substance introduction preventing piece 202 has a shape corresponding to a lower side of the second surface of the end plate 100.

A groove-shaped brush 235 is formed on an inner surface of the second surface of the foreign substance introduction preventing piece 202, which faces the rail 50.

The lubricant guide part 210 includes an upper body 220 that is inserted into the upper space 101, and a lower body 230 that is connected to opposite sides of the foreign substance introduction preventing piece 202 and is inserted into the lower space 103 while contacting the rib 130.

The upper body 220 of the lubricant guide part 210 surrounds a half of the screw coupling part 140, and the lower body 230 of the lubricant guide part 210 surrounds one fourth of the screw coupling part 140.

The forward/rearward length of the upper body 220 is the same as the forward/rearward length of the upper space, and the forward/rearward length of the lower body 230 is the same as the forward/rearward length of the lower space.

It is preferable that the external shape of the upper body 220 corresponds to the upper space 101 of the end plate 100.

A recess 221 in which the second injection part 123 is accommodated and an insertion part 223 that protrudes to be inserted into the first injection part 121 are formed on the second surface of the upper body 220. An injection hole 241a, which will be described below, is formed at an upper end of the insertion part 223 to pass through the insertion part 223 forwards and rearwards and is connected to the center of the injection passage 250, which will be described below.

Extension parts 231, in which outlets 275a and 275b of the lubricant channels, which will be described below, are formed, are formed on opposite sides of the lower body 230. A stop recess 233, by which an upper fixing piece 531 of a retainer 530, which will be described below, is formed on an inner surface of each of the extension parts 231. The extension part 231 is located between the roller guide part 500, which will be described below, and the retainer 530. The extension part 231 maintains an insertion location of the guide member, which will be described below, together with the above-mentioned position maintaining part 107.

In the lower body 230, a space, in which the rail 50 is accommodated, is formed by a part, to which the upper seal 420 is fixed, and the opposite extension parts 231.

A lubricant channel including a passage, through which the lubricant is supplied between the rail 50 and the block 70, is formed in the lubricant guide part 210 of the end seal 200. Three injection holes 241a and 241b connected to the three lubricant injecting parts 121 and 123 are formed in the lubricant channel.

The passage is a groove formed on the first surface of the end seal 200. In detail, the passage includes an injection passage 250, through which the lubricant injected into the inlets 241a and 241b of the lubricant channel flows, a branch point 260 that branches the injection passage 250 to opposite directions of the rail 50, and branch passages that extend from opposite sides of the branch point 260 and has outlets 275a and 275b formed at ends thereof.

The injection passage 250 is formed in the upper body 220. The injection passage 250 includes horizontal passages 251 that extend from the left and right injection holes 241b to the center, and an extension passage 253 that vertically extends from a central injection hole 241a into which the left and right horizontal passages 251 merge. That is, the central injection hole 241a is formed on the horizontal passages 251.

The branch point 260 is formed at the center of the injection passages 250, that is, at an end of the extension passages 253.

The branch passages include linear passages 271 that extend from the branch point 260 to the left and right sides, diagonal passages 273 that extend from ends of the linear passages 271 to the extension parts 231 and in which elastic bodies 300, which will be described below, are installed, and discharge passages 275 that extend from ends of the diagonal passages 273 to a lower side and have outlets 275a and 275b formed at ends thereof.

The discharge passages 275 are formed in the extension parts 231, and include one passage connected to the diagonal passages 273, and two passages that are branched from ends of the one passage to opposite sides and have the outlets 275a and 275b. The discharge holes 275a and 275b are located to face lubricant guide holes 511a and 511b of the roller guide part 500, which will be described below. Two outlets 275a and 275b are formed for one extension part 231, and the two outlets 275a and 275b forms an angle of 90 degrees. In more detail, the outlets 275a and 275b include a first outlet 275a that is closed to the outside, and a second outlet 275b located closer to the inside than the first outlet 275a.

A guide groove 203 that guides assembling of the end seal 200 and the end plate 100 is formed on the upper surface of the end seal 200, in detail, on the upper side of the central injection hole 241a.

The lubricant channel includes a protrusion 245 that is formed to cover a portion of the diagonal passage 173, and an elastic body insertion recess 243 which is formed on an opposite side of the protrusion 245 and into which a hollow elastic body 300 is inserted. The elastic bodies 300 are installed in the opposite branch passages, and are formed between the branch point 260 and the outlets 275a and 275b. In the present embodiment, the elastic bodies 300 may be O-rings 300. The curvatures of the outer peripheral surfaces of the O-rings 300 are the same as the curvatures of the inner surfaces of the O-rings 300, which define the elastic body insertion recesses 243. Accordingly, it is easy to install the O-rings 300 in the elastic body insertion recesses 243, and even though forces are applied to the O-rings 300 several times, they are not easily extracted from the elastic body insertion recesses 243.

In the present embodiment, the protrusion 245 has a substantially elliptical shape, and the elastic body insertion recess 243 has a shape that is the same as the external shape of the O-ring 300. The elastic body 300 is installed in the elastic body insertion recess 243 such that two-thirds of the outer peripheral surface of the elastic body 300 is inserted into the elastic body insertion recess 243.

The elastic body 300 and the protrusion 245 contact each other to close the passage. In more detail, a part of the elastic body 300, which is not inserted into the elastic body insertion recess 243, and the protrusion 245 closes the branch passage such that the lubricant does not flow through the passages between the injection hole 241a and 241b and the outlet 275a and 275b.

It is preferable that the elastic body 300 is pressed by the protrusion 245 such that the branch passage is not easily opened.

When the lubricant is injected into the lubricant channel, a lubricant injecting force of a specific value or more is applied so that the passage is opened when the elastic body 300 is elastically deformed. That is, even though the lubricant is present at a location of the diagonal passage 273, before the elastic body 300, the lubricant cannot be supplied to the outlet 275a and 275b if the pressure of the lubricant supplied is not a specific value or more.

The elastic body 300 may be elastically deformed inwards such that the cross-sectional area of the empty inner space decreases. That is, even though a force is applied to the elastic body 300 of the inventive concept and the elastic body 300 is deformed, the elastic body 300 neither covers nor closes the branch passage not to hamper the flow of the lubricant.

According to the inventive concept, if the lubricant is injected through the injection hole 241a and 241b, the lubricant injection pressure is formed in the passage, and the pressure becomes a specific value or more such that the elastic body 300 is deformed if the pressure is applied to the elastic body 300. If the contact between the elastic body 300 and the protrusion 245 is released while the elastic body 300 is deformed, the branch pass is opened such that the lubricant is supplied from the injection hole 241a and 241b to the outlet 275a and 275b.

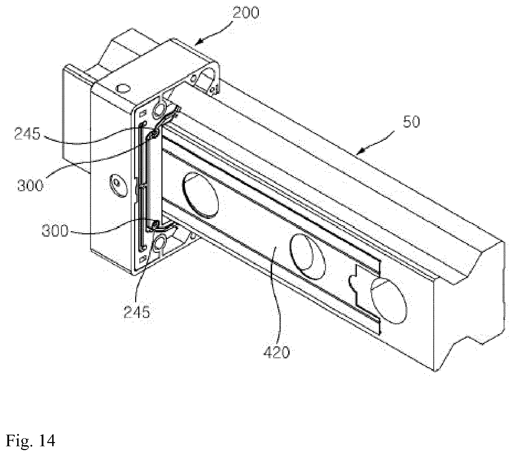

According to the inventive concept, because the passage is closed by the elastic body 300 and the protrusion 245 if the lubricant of a specific pressure or more is not injected even though the linear guide is installed in an inclined state (a state in which the linear guide is inclined by 90 degrees in FIG. 14), the lubricant does not flow backward to the injection hole 241a and 241b.

Further, according to the inventive concept, because the lubricant is supplied to the outlets 275a and 275b via the branch passage, which is opened at a pressure of a specific value or more, it may be supplied uniformly to the opposite sides of the rail 50. That is, an equal amount of lubricant is supplied to the opposite discharge passages 275.

### --------------- Upper seal 420/lower seal 410 ----------------

The upper seal 420 has a thin plate shape, and one upper seal is installed for one linear guide.

An end seal insertion recess 433, an end of which is opened such that the end seal 200 is inserted into the end seal insertion recess 433, is formed in the upper seal 420, and a fixing part 280 that protrudes form a surface of the end seal 200, which faces the block 70, to be inserted into the end seal insertion recess 433 is formed in the end seal 200.

A total of two end seal insertion recesses 433 are formed on front and rear sides of one upper seal 420.

The end seal insertion recesses 433 is surrounded by opposite side surfaces 435, and a stop surface 437, opposite ends of which are connected to the opposite side surfaces 435 and which is stopped by one end of the fixing part 280.

A stopper insertion recess 439 that is recessed from the stop surface 437 of the upper seal 420 such that a stopper 285 is inserted into the stopper insertion recess 439 is further formed in the end seal insertion recess 433. That is, the end seal insertion recess 433 is surrounded by the stop surface 437 including parts formed by recessing the opposite side surfaces 435 and the center of the end seal insertion recess 433. In other words, the end seal insertion recess 433 includes a substantially rectangular recess that is surrounded by the opposite side surfaces 435 and the stop surface 437, and a semicircular stopper insertion recess 439 that is surrounded by the inwardly recessed stop surface 437.

An upper seal insertion recess, into which the upper seal 420 is inserted, is formed in the fixing part 280 formed between the left and right extension parts 231 of the end seal 200, and if the upper seal 420 is installed in the end seal 200, the opposite sides of the end seal insertion recess 433 face the opposite sides of the upper seal insertion recess. The fixing part 280 includes side surface recesses 283, into which the opposite side surfaces 435 of the end seal insertion recess 433 are inserted, opposite sliding pieces 281 in which the side surface recesses 283 are formed, and a stopper 285 that is formed between the opposite sliding pieces 281. Accordingly, the upper seal 420 installed in the fixing part 280 of the end seal 200 is not biased to left and right sides and the location of the upper seal 420 is fixed.

The upper seal insertion recess includes a side surface recess 283 and a circumferential recess 287.

The sliding piece 281 has a rectangular parallelepiped shape, and the stopper 285 has a cylindrical shape.

The side surface recess 283 is formed on a side surface of the sliding piece.

The stopper 285 is formed to be protrude to one side, that is, toward the first surface of the end seal 200 than the sliding piece 281 such that the stop surface 437 of the upper seal 420 is stopped by the stopper 285. In detail, an end of the sliding piece 281 is located in parallel to the center of the stopper 285 and contacts the stop surface 437.

A recess 287, into which an inner surface that forms the stop surface 437 and the stopper insertion recess 439 is inserted, is formed in the stopper 285. The recess 287 will be referred to as the circumferential recess 287. The circumferential recess 287 has a band shape on an outer peripheral surface of the stopper 285.

If the upper seal 420 is installed in the end seal 200, the stopper surface 437 is located on opposite sides of the stopper 285. Accordingly, the stopper 285 also may function to prevent the upper seal 420 from being biased to the left and right sides.

The upper seal 420 may be installed in the end seal 200 by a proper depth by the stopper 285, the sliding piece 281, and the stop surface 437.

The upper seal 420 includes a first shield piece 421 in which the end seal insertion recess 433 is formed, a second shield piece 441 connected to opposite ends of the first shield piece 421, and a curved part 431, opposite ends of which are connected to the first shield piece 421 and the second shield piece 441 and which protrudes downwards.

The first shield piece 421 covers the upper surface of the rail 50 that may be exposed through an aperture between the end seal 200 and the block 70 and the second shield piece 441 covers the space between the end seal 200 and the rail 50 so that foreign substances on the upper side of the block 70 is prevented from being introduced toward the rail 50. Accordingly, it is preferable that the leftward and rightward width of the upper seal 420 is greater than a minimum interval between the opposite retainers 530 and smaller than an interval between opposite ends of the rail 50.

Through-holes 423 are formed on upper and lower sides of the first shield piece 421. The through-holes 423 are formed between the opposite end seal insertion recesses 433 to be spaced apart from each other. If the through-holes 423 are formed such that bolt installation holes of the rail 50 are exposed to the outside if the through-holes 423 are located above the bolt installation holes.

The first and second shield pieces 421 and 441 are formed of a polyamide material.

An upper shield piece 443 of a urethane material, which protrudes downwards, is installed at a side end of the second shield piece 441. The upper shield piece 443 is located in parallel to a surface of the foreign substance introduction preventing piece 202, which faces the upper surface of the rail 50.

The lower seal 410 has a thin bar shape.

The lower seal 410 includes an insertion piece of a polyamide material, which is inserted into the lower seal insertion recess 113 of the end plate 100, and a low shield piece of a urethane material, which is installed on a side surface of the insertion piece. The lower shield piece covers an aperture between the lower surface of the end plate 100 and the retainer 530 to prevent foreign substances that pass through the aperture from being introduced toward the rail 50.

Two lower seals 410 are installed for one end plate 100.

### --------------- Travel guide member ----------------

The travel guide part 111 includes a roller part (not illustrated) that contacts the rail 50, and a roller guide part 500, into which the roller part (not illustrated) is inserted.

The roller part (not illustrated) is constituted to have a band shape by connecting a plurality of rollers that roll in a travel direction of the block 70.

The roller guide part 500 includes two roller accommodating tubes 510a and 510b, in to which the roller part (not illustrated) is inserted, and a retainer 530 that is coupled to the roller accommodating tubes 510a and 510b to prevent the two roller accommodating tubes 510a and 510b from being disassembled.

The roller accommodating tubes 510a and 510b are inserted into the roller guide part accommodating parts 105 of the end plates 100, and the retainers 530 are coupled to the roller guide parts 500 to be supported by the end seals 200 of the end plates 100.

The roller accommodating pipes 510a and 510b are located to face the left and right surfaces of the end plate 100, and the retainers 530 are located between the roller accommodating pipes 510a and 510b and the rail 50.

The roller accommodating pipes 510a and 510b are constituted by assembling two symmetrical components.

In the present embodiment, the roller accommodating pipes 510a and 510b include a first roller accommodating pipe 510a that is fixed to a lower fixing piece 533 of the retainer 530, which will be described below, and a second roller accommodating pipe 510b that is fixed to an upper fixing piece 531 of the retainer 530, which will be described below. The first roller accommodating pipe 510a and the second roller accommodating pipe 510b are of the same product. For convenience' sake, in the specification, it will be described with the assumption that one roller accommodating pipe 510a and 510b is an integral component.

The roller accommodating pipe 510a and 510b includes a linear pipe 513, and two corner pipes that extend from front and rear ends of the linear pipe 513 to have a U shape.

The corner pipe includes a first bent pipe 521 that is connected to the linear pipe 513, a vertical pipe 523 that is connected to the first bent pipe 521 to be perpendicular to the linear pipe 513, a second bent pipe 525 that is connected to the vertical pipe 523, and an insertion pipe 527 that is connected to the second bent pipe 525 to be parallel to the linear pipe 513 and is inserted into an insertion hole 537 of the retainer 530, which will be described below.

The insertion pipe 527 has an opening 529 that is connected to the insertion hole 537 of the retainer 530, which will be described below. Because the diameter of the insertion pipe 527 of the corner pipe is smaller than the diameters of the other pipes 521, 523, and 525, the roller part (not illustrated) protrudes to the outside.

The corner pipes include a first corner pipe 520a that has a long insertion part, and a second corner pipe 520b that has an insertion part, of which the length is shorter than the length of the insertion part of the first corner pipe 520a. Then, the opening 529 of the first corner pipe 520a is longer than the opening 529 of the second corner pipe 520b. That is, one roller accommodating pipe 510a and 510b includes two corner pipes that have different shapes.

A lubricant guide hole 511a and 511b is formed at a location of the roller accommodating pipe 510a and 510b, which faces the outlet 275a and 275b of the end seal 200, to pass through the roller accommodating pipe 510a and 510b. The lubricant guide holes 511a and 511b include a first lubricant guide hole 511a that is formed in the first roller accommodating pipe 510a, and a second lubricant guide hole 511b that is formed in the second roller accommodating pipe 510b. The first lubricant guide hole 511a faces the first outlet 275a, and the second lubricant guide hole 511b faces the second outlet 275b.

The first lubricant guide hole 511 a is formed in the linear pipe 513 of the first corner pipe 520a or the bent pipe 521 of the second corner pipe 520b, and the second lubricant guide hole 511b is formed close to an end of the insertion part. Accordingly, a total of eight lubricant guide holes 511a and 511b are formed on the upper sides and the lower sides of the roller guide parts 500 such that four lubricant guide holes 511a and 511b are provided for the upper side and the lower side of one roller guide part 500, respectively, but the ones that function as guide holes are located on the upper side so that four lubricant guide holes 511a and 511b face the outlets 275a and 275b.

The lubricant that has been introduced into the lubricant guide holes 511a and 511b through the end seals 200 is delivered to the roller part (not illustrated) after flowing into the roller accommodating pipes 510a and 510b, and the lubricant on the roller part (not illustrated) is delivered to the rail 50 and functions as a lubricant when the roller part (not illustrated) contacts the rail 50.

The first roller accommodating pipe 510a and the second roller accommodating pipe 510b are assembled such that the second corner pipe 520b of the another roller accommodating pipe 510a and 510b is located inside the first corner pipe 520a. Accordingly, a space, in which the roller part (not illustrated) is accommodated, is formed between the front and rear corner pipes of the roller accommodating pipe 510a and 510b. Because the exposed roller part (not illustrated) protrudes toward the rail 50 in a state in which the roller part (not illustrated) is accommodated in the insertion part of the retainer 530, it contacts the rail 50.

### --------------- Retainer 530 ---------------

In the present embodiment, the retainer 530 includes an upper fixing piece 531, into which the second roller accommodating pipe 510b inserted into to be fixed, a lower fixing piece 533, into which the first roller accommodating pipe 510a is inserted to be fixed while being perpendicular to the upper fixing piece 531, and a connecting piece 535 that connects the upper fixing piece 531 and the lower fixing piece 533 such that the upper fixing piece 531 and the lower fixing piece 533 are perpendicular to each other.

The length of the forward/rearward length of the retainer 530 is the same as the forward/rearward lengths of the roller accommodating pipes 510a and 510b assembled.

An insertion hole 537 in or into which the roller part (not illustrated) and the insertion part of the corner pipe are accommodated or inserted is formed in the upper fixing piece 531 and the lower fixing piece 533 in the forward/rearward lengthwise direction thereof.

The upper fixing piece 531 is stopped by the stop recess 233 of the end seal 200, and the lower fixing piece 533 is stopped by the stop recess 133 of the end plate 100.

The upper and lower ends of the connecting piece 535 are connected to the upper fixing piece 531 and the lower fixing piece 533, respectively.

The connecting piece 535 has a W-shaped cross-section, and the protruding portion contacts and supports the roller guide part 500 such that the roller guide part 500 is not shaken.

Meanwhile, the block 70 is formed of an alloy steel material.

The rail 50 is formed of a carbon steel material.

The upper seal 420 and the lower seal 410 are manufactured in a mold through dual injection-molding.

The retainer 530 is formed of a polyethylene material.

The end plate 100, the roller guide part 500, and the O-ring 300 are formed of a polyamide material.

The end seal 200 is formed of a polyamide and urethane material.

Meanwhile, a ring that has a shape that is different from the O-ring 300 may be used as the elastic body 300. For example, if the part of the elastic body 300, which is exposed to the diagonal passage 273, may has a curved shape that may be easily deformed such that the interior of the elastic body 300 is wider than that of the O-ring and the other parts of the elastic body 300 have polygonal shapes, the part of the elastic body 300, which is exposed to the diagonal passage 273, may be deformed more easily.

A more detailed description of the present embodiment is referenced by U.S. Patent No. 9163665 B2.

The linear guide of the inventive concept has the following effects.

According to the inventive concept, a location of the upper seal fixed to the fixing parts of the end seals may be fixed without being biased to the left and right sides.

Further, according to the inventive concept, the upper seal may be easily installed in and fixed to the end seals.

As described above, although the inventive concept have been described with reference to the preferred embodiment, the inventive concept may be variously changed or modified by an ordinary person in the art without departing from the spring and area of the inventive concept, which are claimed in the claims.

## Claims

1. A linear guide comprising:
end plates installed on front and rear sides of a block that is disposed in a rail to be slid;
end seals inserted into the end plates; and
an upper seal installed in the end seals to be located on the upper side of the rail,
wherein the upper seal has end seal insertion recesses, ends of which are opened such that the ends seals are inserted into the opened ends of the upper seal, and
wherein fixing parts protruding from surfaces of the end seals, which face the block, and inserted into the end seal insertion recesses are formed in the end seals.

2. The linear guide of claim 1, wherein the upper seal is installed in the fixing parts of the end seals,
wherein the fixing parts have upper seal insertion recesses, into which the upper seal is inserted, and
wherein opposite sides of the end seal insertion recesses face opposite sides of the upper seal insertion recesses when the upper seal is installed in the end seals.

3. The linear guide of claim 2, wherein each of the end seal insertion recesses is surrounded by opposite side surfaces, and a stop surface, opposite ends of which are connected to the opposite side surfaces and which is stopped by one end of the corresponding fixing part, and
wherein the fixing part includes a side surface recess, into which opposite side surfaces of the corresponding end seal insertion recess.

4. The linear guide of claim 3, wherein each of the fixing parts includes:
opposite sliding pieces having the side surface recesses; and
a stopper formed between the opposite sliding pieces, and
wherein the stopper protrudes to one side than the sliding pieces such that the stop surface of the upper seal is stopped by the stopper.

5. The linear guide of claim 3, wherein a stopper insertion recess formed by recessing the stop surface of the upper seal such that the stopper is inserted into the stopper insertion recess is further formed in the corresponding end seal insertion recess, and
wherein the stop surfaces are located on opposite sides of the stopper.

6. The linear guide of claim 5, wherein a recess, into which an inner surface defined by the stop surface and the stopper insertion recess is inserted, is formed in the stopper.

7. The linear guide of claim 1, wherein one end plate and one end seal are installed on each of front and rear sides of the block, and
wherein the front side and the rear side of the upper seal are installed in the front end seal and the rear end seal.
